# EUROPÄISCHE PATENTSCHRIFT

(11) **EP 0 656 024 B1**
(45) Veröffentlichungstag und Bekanntmachung des Hinweises auf die Patenterteilung: **26.03.1997**
(21) Anmeldenummer: 94908171.5
(22) Anmeldetag: 10.08.1993
(51) Int. Cl.: C08G 59/42, C08G 59/62, C09D 5/03

(54) **VERFAHREN ZUR HERSTELLUNG VON PULVERLACKEN UND NACH DIESEM VERFAHREN HERGESTELLTE PULVERLACKE**
PROCESS FOR PRODUCING POWDERED PAINTS AND POWDERED PAINTS PRODUCED THEREBY
PROCEDE DE FABRICATION DE VERNIS EN POUDRE ET VERNIS EN POUDRE OBTENUS SELON CE PROCEDE

(30) Priorität: 20.08.1992 DE 4227580
(43) Veröffentlichungstag der Anmeldung: 07.06.1995
(73) Patentinhaber: BASF Lacke + Farben AG, 48165 Münster-Hiltrup (DE)
(72) Erfinder: KRANIG, Wolfgang, D-48308 Senden (DE); CIBURA, Klaus, D-48167 Münster (DE); WOLTERING, Joachim, D-48145 Münster (DE); HILGER, Christopher, D-48151 Münster (DE)
(86) Internationale Anmeldenummer: EP9302122
(87) Internationale Veröffentlichungsnummer: WO9404590

(56) Entgegenhaltungen:
- EP-A- 0 299 420
- DE-A- 2 908 700
- PATENT ABSTRACTS OF JAPAN vol. 16, no. 304 (C-959)(5347) & JP,A,40 085 322

## Beschreibung

Die Erfindung betrifft ein Verfahren zur Herstellung von Pulverlacken, bei dem eine Mischung aus
A) einem Bindemittel, bestehend aus einem epoxidgruppenhaltigen Kunstharz oder einer Mischung aus epoxidgruppenhaltigen Kunstharzen und
B) einem Vernetzungsmittel, bestehend aus einer Verbindung, die im statistischen Mittel mindestens zwei Carboxylgruppen und mindestens eine Säureanhydridgruppe pro Molekül enthält oder einer Mischung aus solchen Verbindungen
in geschmolzenem Zustand homogenisiert wird und die so erhaltene homogenisierte Schmelze nach Abkühlung und Erstarrung pulverisiert wird.

Die Erfindung betrifft auch nach diesem Verfahren hergestellte Pulverlacke.

Das oben beschriebene Verfahren ist bekannt (vgl. z.B. US-A-4,091,048, DE-A-2 214 650 und EP-A-299 420.

In der EP-A-299 420 wird ein Verfahren zur Herstellung von Pulverlacken der oben beschriebenen Art offenbart, mit dem Pulverlacke herstellbar sein sollen, die lagerstabil sind und Lackfilme mit guten Eigenschaften liefern. Das in der EP-A-299 420 beschriebene Verfahren zeichnet sich dadurch aus, daß als Komponente B) eine durch Umsetzung mit einem Polyol modifizierte Verbindung, die im statistischen Mittel mindestens zwei Carboxylgruppen und mindestens zwei Säureanhydridgruppen pro Molekül enthält, eingesetzt wird. Die nach diesem Verfahren hergestellten Pulverlacke liefern Lackfilme, deren Eigenschaften insbesondere für die Anwendung in der Automobillackierung verbesserungsbedürftig sind.

Die der vorliegenden Erfindung zugrundeliegende Aufgabenstellung besteht in der Bereitstellung eines Verfahrens zur Herstellung von Pulverlacken der eingangs beschriebenen Art, mit dem Pulverlacke hergestellt werden können, die im Vergleich zu den Pulverlacken des Standes der Technik Lackfilme mit verbesserten Eigenschaften liefern. Diese Aufgabe wird überraschenderweise durch ein Verfahren der eingangs beschriebenen Art gelöst, das dadurch gekennzeichnet ist, daß der Mischung aus A) und B) vor oder während des Schmelzhomogenisierungsprozesses
C) ein Polyol oder eine Mischung aus Polyolen in einer solchen Menge zugesetzt wird, daß pro Säureanhydridgruppe der Komponente B) 0,1 bis 0,9, vorzugsweise 0,3 bis 0,6 Hydroxylgruppen der Komponente C) vorliegen.

Die nach dem erfindungsgemäßen Verfahren hergestellten Pulverlacke zeichnen sich im Vergleich zu Pulverlacken des Standes der Technik dadurch aus, daß sie Lackfilme mit verbesserter Haftung (insbesondere bei der Verwendung als Klarlacke für zweischichtige Automobildecklackierungen) und verbesserten Beständigkeiten gegen Superbenzin und Methylethylketon liefern.

Pulverlacke werden üblicherweise hergestellt, indem eine Mischung aus den Komponenten A) und B) in geschmolzenem Zustand homogenisiert wird und die so erhaltene homogenisierte Schmelze nach Abkühlung und Erstarrung pulverisiert wird. Der Prozeß des Aufschmelzens und Homogenisierens der Mischung aus den Komponenten A) und B) wird Schmelzhomogenisierungsprozeß genannt. Er wird üblicherweise durch Extrudieren der Mischung durchgeführt. Je nach gewünschter Pulverlackrezeptur können der Mischung aus den Komponenten A) und B) vor oder während des Schmelzhomogenisierungsprozesses weitere übliche Pulverlackbestandteile wie z.B. ein oder mehrere Vernetzungskatalysatoren (beispielsweise quaternäre Ammoniumsalze, quaternäre Phosphoniumsalze, Phosphine, Imidazoline und Metallsalze, vgl. auch EP-A-299 420, Seite 4, Zeile 51 und Zeile 52), ein oder mehrere Pigmente, ein oder mehrere Lichtschutzmittel, ein oder mehrere Entgasungsmittel (beispielsweise Benzoin), ein oder mehrere Verlaufshilfsmittel (vgl. z.B. EP-A-299 420, Seite 5, Zeile 7 bis 14), ein oder mehrere zusätzliche Bindemittel, ein oder mehrere zusätzliche Vernetzungsmittel usw. zugesetzt werden. Die nach Abschluß des Schmelzhomogenisierungsprozesses erhaltene Schmelze wird nach Abkühlung und Erstarrung pulverisiert.

Das oben beschriebene Verfahren zur Herstellung von Pulverlacken ist gut bekannt und braucht nicht näher erläutert werden (vgl. z.B. auch H. Kittel, Lehrbuch der Lacke und Beschichtungen, Band VIII, Teil 2, Verlag W.A. Colomb in der Heenemann Verlagsgesellschaft mbH Berlin und Oberschwandorf, 1980).

Es ist nun erfindungswesentlich, daß der Mischung aus den Komponenten A) und B) vor oder während des Schmelzhomogenisierungsprozesses C) ein Polyol oder eine Mischung aus Polyolen in einer solchen Menge zugesetzt wird, daß pro Säureanhydridgruppe der Komponente B) 0,1 bis 0,9, vorzugsweise 0,3 bis 0,6 Hydroxylgruppen der Komponente C) vorliegen. Die Komponente C) wird vorzugsweise vor Beginn des Schmelzhomogenisierungsprozesses zu der Mischung aus den Komponenten A) und B) gegeben. Wenn die Komponente C) während des Schmelzhomogenisierungsprozesses zugegeben wird, dann ist darauf zu achten, daß die Zugabe so rechtzeitig erfolgt, daß noch ausreichend Zeit für eine homogene Einarbeitung der Komponente C) vorhanden ist.

Die Dauer des Schmelzhomogenisierungsprozesses und die dabei anzuwendenden Temperaturen hängen von mehreren Parametern (z. B. von der Art der eingesetzten Maschine, von der Glasübergangstemperatur des Bindemittels usw.) ab und müssen vom Fachmann - wie bei den Verfahren des Standes der Technik auch - mit Hilfe von Routinearbeiten optimiert werden. Die zu homogenisierende Mischung sollte während des Schmelzhomogenisierungsprozesses im allgemeinen nicht über 130°C, vorzugsweise nicht über 120°C, besonders bevorzugt nicht über 110°C erhitzt werden.

Bei dem erfindungsgemäßen Verfahren kann als Komponente A) im Prinzip jedes zur Herstellung von Pulverlacken einsetzbare epoxidgruppenhaltige Kunstharz oder eine Mischung aus solchen Kunstharzen eingesetzt werden. Als Beispiele für einsetzbare epoxidgruppenhaltige Kunstharze werden epoxidgruppenhaltige Polyacrylatharze, Polyglycidylether von aliphatischen oder cycloaliphatischen Alkoholen, wie z.B. Ethylenglykol, Diethylenglykol, 1,2-Propylenglykol, 1,4-Butylglykol, 1,2-Cyclohexandiol, 1,4 Cyclohexandiol, 1,2-bis(hydroxymethyl)cyclohexan und hydriertes Bisphenol A, Polyglycidylether von Polyphenolen wie z.B. Bisphenol A, 1,1-Bis(4-hydroxyphenyl)ethan und 2-Methyl-1, 1-bis(4-hydroxyphenyl)propan sowie die in der US-Patentschrift 4,102,942 in Spalte 3, Zeile 1 bis 16 aufgezählten epoxidgruppenhaltigen Verbindungen genannt.

Als Komponente A) wird vorzugsweise ein epoxidgruppenhaltiges Polyacrylatharz oder eine Mischung aus epoxidgruppenhaltigen Polyacrylatharzen eingesetzt.

Unter einem epoxidgruppenhaltigen Polyacrylatharz wird ein Polymer verstanden, das durch Copolymerisation von mindestens einem ethylenisch ungesättigten Monomer, das mindestens eine Epoxidgruppe im Molekül enthält, mit mindestens einem weiteren ethylenisch ungesättigten Monomer, das keine Epoxidgruppe im Molekül enthält, herstellbar ist, wobei mindestens eines der Monomere ein Ester der Acrylsäure oder Methacrylsäure ist. Epoxidgruppenhaltige Polyacrylatharze sind bekannt (vgl. z.B. EP-A-299 420, DE-B-22 14 650, US-A-4,091,048 und US-A-3,781,379).

Als Beispiele für ethylenisch ungesättigte Monomere, die mindestens eine Epoxidgruppe im Molekül enthalten, werden Glycidylacrylat, Glycidylmethacrylat und Allylglycidylether genannt.

Als Beispiele für ethylenisch ungesättigte Monomere, die keine Epoxidgruppe im Molekül enthalten, werden Alkylester der Acryl- und Methacrylsäure, die 1 bis 20 Kohlenstoffatome im Alkylrest enthalten, insbesondere Methylacrylat, Methylmethacrylat, Ethylacrylat, Ethylmethacrylat, Butylacrylat, Butylmethacrylat, 2-Ethylhexylacrylat und 2-Ethylhexylmethacrylat genannt. Weitere Beispiele für ethylenisch ungesättigte Monomere, die keine Epoxidgruppen im Molekül enthalten sind Säuren, wie z.B. Acrylsäure und Methacrylsäure, vinylaromatische Verbindungen, wie Styrol und Vinyltoluol, Nitrile, wie Acrylnitril und Methacrylnitril, Vinyl- und Vinylidenhalogenide, wie Vinylchlorid und Vinylidenfluorid, Vinylester, wie z.B. Vinylacetat und hydroxylgruppenhaltige Monomere, wie z.B. Hydroxyethylacrylat und Hydroxyethylmethacrylat. Bei der Verwendung von Monomeren, die funktionelle Gruppen tragen, die potentiell zur Reaktion mit den Epoxygruppen fähig sind, ist bei der Herstellung der Polyacrylatharze darauf zu achten, daß sie nur in solchen Mengen eingesetzt werden, bzw. die Reaktionsführung so gewählt wird, daß eine Selbstvernetzung des Polyacrylatharzes entweder nicht oder nur in geringem Umfang eintritt.

Das epoxidgruppenhaltige Polyacrylatharz weist üblicherweise ein Epoxiaäquivalentgewicht von 350 bis 2000, vorzugsweise 450 bis 1500, besonders bevorzugt 500 bis 1350, ein zahlenmittleres Molekulargewicht (gelpermeationschromatisch unter Verwendung eines Polystyrolstandards bestimmt) von 500 bis 100.000, vorzugsweise von 500 bis 20.000, besonders bevorzugt von 1000 bis 10.000, ganz besonders bevorzugt von 1000 bis 5000 und eine Glasübergangstemperatur (T_{G}) von 30 bis 80, vorzugsweise von 35 bis 70, besonders bevorzugt von 40 bis 60°C auf.

Das epoxidgruppenhaltige Polyacrylatharz kann nach allgemein gut bekannten Methoden durch radikalische Polymerisation hergestellt werden.

Bei dem erfindungsgemäßen Verfahren kann als Komponente B) im Prinzip jede Verbindung, die im statistischen Mittel mindestens zwei Carboxylgruppen und mindestens eine Säureanhydridgruppe pro Molekül enthält oder eine Mischung aus solchen Verbindungen eingesetzt werden. Als Komponente B) werden insbesondere polymere Anhydride von Polycarbonsäuren, vorzugsweise polymere Anhydride von Dicarbonsäuren, besonders bevorzugt polymere Anhydride von cycloaliphatischen oder aliphatischen Dicarbonsäuren, wobei die Dicarbonsäuren 3 bis 20, vorzugsweise 6 bis 12 Kohlenstoffatome pro Molekül enthalten, oder Mischungen aus solchen polymeren Anhydriden eingesetzt. Konkrete Beispiele für besonders bevorzugt eingesetzte polymere Anhydride sind Poly(adipinsäureanhydrid), Poly(azelainsäureanhydrid), Poly(sebazinsäureanhydrid) und Poly(dodecandisäureanhydrid) sowie von Mischungen aus Adipinsäure und/oder Azelainsäure und/oder Sebazinsäure und/oder Dodecandisäure abgeleitete polymere Anhydride. Als Komponente B) wird ganz besonders bevorzugt Poly(dodecandisäureanhydrid) eingesetzt.

Die Komponenten A) und B) werden in einem solchen Mengenverhältnis miteinander gemischt, daß pro Äquivalent Epoxidgruppen der Komponente A) 1,5 bis 0,5, vorzugsweise 1,3 bis 0,7, besonders bevorzugt 1,2 bis 0,8 Äquivalente Carboxylgruppen der Komponente B) vorliegen.

Bei dem erfindungsgemäßen Verfahren kann als Komponente C) im Prinzip jedes Polyol oder eine Mischung aus Polyolen eingesetzt werden. Unter einem Polyol wird eine organische Verbindung, die im statistischen Mittel mehr als eine Hydroxylgruppe pro Molekül enthält, verstanden. Als Komponente C) werden vorzugsweise Polyole eingesetzt, die im statistischen Mittel mindestens zwei Hydroxylgruppen pro Molekül enthalten. Beispiele für Polyole, die als Komponente C) eingesetzt werden können, sind niedermolekulare Polyole, wie z.B. Trimethylolpropan, Pentaerythrit, Hexandiol, 2,2-Dimethylolpropionsäure, Glycerin, Sorbit usw. und höhermolekulare Polyole, wie z.B. Polyesterpolyole, Polyetherpolyole, Polyurethanpolyole, Celluloseacetobutyrat, Polycaprolactonpolyol usw. Als Komponente C) werden vorzugsweise Trimethylolpropan, Hexandiol, 2,2-Dimethylolpropionsäure, Pentaerythrit oder eine Mischung aus diesen Polyolen eingesetzt. Als Komponente C) wird ganz besonders bevorzugt Trimethylolpropan eingesetzt.

Die nach dem erfindungsgemäßen Verfahren hergestellten Pulverlacke können auf beliebige Substrate wie z.B. Metall, Glas oder Plastik mit Hilfe von für Pulverlacke geeigneten Applikationsmethoden, vorzugsweise elektrostatisch, appliziert werden. Die nach dem erfindungsgemäßen Verfahren hergestellten Pulverlacke eignen sich besonders gut als Pulverklarlacke zur Herstellung der Klarlackschicht in Zweischichtlackierungen, die durch Vorlackieren eines pigmentierten, vorzugsweise eines mit Metallplättchen wie z.B. Aluminiumplättchen pigmentierten Basislackes und Überlackieren der so erhaltenen Basislackschicht mit einem Pulverklarlack erhältlich sind. Als Basislacke können sowohl wasserverdünnbare Basislacke als auch Basislacke, die ausschließlich organische Löse- bzw. Verdünnungsmittel enthalten, verwendet werden. Derartige Zweischichtlackierungen werden insbesondere bei der Automobillackierung z.B. zur Herstellung von Metalleffektlackierungen eingesetzt.

Die nach dem erfindungsgemäßen Verfahren hergestellten Pulverlacke werden üblicherweise bei 130 bis 180°C eingebrannt.

Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung der Komponente A)

Zu 30,0 Gewichtsteilen Xylol wird innerhalb von 4 Stunden eine Mischung aus 37,06 Gewichtsteilen Methylmethacrylat, 14,40 Gewichtsteilen Glycidylmethacrylat, 9,00 Gewichtsteilen n-Butylacrylat und 6,54 Gewichtsteilen Styrol bei 120°C gegeben. Beginnend mit der Zugabe der Monomerenmischung werden 3,0 Teile tert. Butylper-2-ethylhexanoat (TBPEH; Hersteller: Peroxid-Chemie) innerhalb von 4,5 Stunden zugegeben. Während der Zugabe der Monomerenmischung und des Peroxids beträgt die Reaktionstemperatur 120°C. Diese Temperatur wird nach Beendigung der Zugabe des Peroxids noch für eine Stunde gehalten. Dann wird das Xylol bei vermindertem Druck entfernt, das Kunstharz auf 180°C erhitzt und aus dem Reaktionsgefäß abgelassen.

### 2. Herstellung der Komponente B)

67,2 Gewichtsteile Dodecandisäure werden zusammen mit 29,8 Gewichtsteilen Essigsäureanhydrid in ein Reaktionsgefäß mit Rückflußkühler eingewogen. Die Mischung wird langsam erhitzt bis Rückfluß einsetzt und 3 Stunden unter Rückfluß belassen. Danach wird die entstandene Essigsäure abdestilliert. Anschließend wird das Reaktionsprodukt nochmals mit 3,00 Gewichtsteilen Essigsäureanhydrid versetzt und für eine Stunde auf Rückflußtemperatur erhitzt. Schließlich wird die entstandene Essigsäure abdestilliert und das Reaktionsprodukt bei 90° aus dem Reaktionsgefäß abgelassen.

### 3. Erfindungsgemäße Herstellung eines Pulverlacks

1095 Gewichtsteile der gemäß Punkt 1. hergestellten Komponente A) werden zusammen mit 303 Gewichtsteilen der gemäß Punkt 2. hergestellten Komponente B), 23,8 Gewichtsteilen Trimethylolpropan (Komponente C)), 5,9 Gewichtsteilen Benzoin, 5,9 Gewichtsteilen eines Verlaufshilfsmittels (Perenol® F40, Hersteller: Henkel KGaA) 35,4 Gewichtsteilen eines ersten Lichtschutzmittels (Tinuvin® 900, Hersteller: Ciba Geigy) und 23,6 Gewichtsteilen eines zweiten Lichtschutzmittels (Tinuvin® 144, Hersteller: Ciba Geigy) in einer Vorschneidemühle zerkleinert und vorgemischt. Die so erhaltene Mischung wird anschließend in einem Ko-Kneter der Firma Buss (Typ PLK 46) bei 60 Umdrehungen/min. extrudiert, wobei die Temperatur in der Mitte des Extrusionsraumes 90 - 110°C beträgt. Das Extrudat wird schnell auf Raumtemperatur abgekühlt, in einer Prall Mühle (ACM 2L der Firma Hosokawa MikroPul) zu einem Pulver mit einem mittleren Teilchendurchmesser von 30 - 40 µm vermahlen und durch ein Sieb mit einer Porengröße von 125 µm gesiebt.

### 4. Herstellung einer Zweischichtlackierung

Auf ein mit einer handelsüblichen Elektrotauchlackierung und einem handelsüblichen Füller beschichtetes phosphatiertes Stahlblech wird ein handelsüblicher, Polyurethan, Polyester und Melaminharz enthaltender wasserverdünnbarer, mit Aluminiumplättchen pigmentierter Basislack so appliziert, daß eine Trockenfilmdicke von 12 bis 15 µm erhalten wird. Der applizierte Basislack wird 10 Minuten bei Raumtemperatur und 10 Minuten bei 80°C getrocknet. Auf das so beschichtete Stahlblech wird dann der gemäß Punkt 3. hergestellte Pulverlack elektrostatisch so überlackiert, daß eine Filmdicke von 50 bis 60 µm erhalten wird. Schließlich werden Basislack und Pulverklarlack 20 Minuten bei 160°C eingebrannt.

### 5. Vergleichsbeispiel

Es wird wie unter Punkt 1. bis Punkt 4. beschrieben verfahren, mit der einzigen Ausnahme, daß das Trimethylolpropan (Komponente C)) in einer Vorreaktion mit der Komponente B) umgesetzt wird. Dazu werden 874 Gewichtsteile der gemäß Punkt 2. hergestellten Komponente B) mit 97,8 Gewichtsteilen Trimethylolpropan versetzt und die Reaktionsmischung 1,5 Stunden lang bei 130°C gehalten. 303 Gewichtsteile dieses Reaktionsproduktes werden dann wie unter Punkt 3. beschrieben zusammen mit 1095 Gewichtsteilen der gemäß Punkt 1. hergestellten Komponente A), 5,9 Gewichtsteilen Benzoin, 5,9 Gewichtsteilen eines Verlaufshilfsmittels (Perenol® F40, Hersteller: Henkel KGaA) 35,4 Gewichtsteilen eines ersten Lichtschutzmittels (Tinuvin® 900, Hersteller: Ciba Geigy AG) und 23,6 Gewichtsteilen eines zweiten Lichtschutzmittels (Tinuvin® 144; Hersteller: Ciba Geigy AG) in einer Vorschneidemühle zerkleinert und vorgemischt. Die so erhaltene Mischung wird wie unter Punkt 3. beschrieben extrudiert und zu einem Pulver vermahlen. Analog zu Punkt 4. hergestellte Lackfilme zeigen eine schlechtere Haftung und eine deutlich schlechtere Beständigkeit gegen Superbenzin und Methylethylketon als die unter Verwendung des erfindungsgemäß hergestellten Pulverlackes hergestellten Lackfilme.

## Patentansprüche

1. Verfahren zur Herstellung von Pulverlacken, bei dem eine Mischung aus
A) einem Bindemittel, bestehend aus einem epoxidgruppenhaltigen Kunstharz oder einer Mischung aus epoxidgruppenhaltigen Kunstharzen und
B) einem Vernetzungsmittel, bestehend aus einer Verbindung, die im statistischen Mittel mindestens zwei Carboxylgruppen und mindestens eine Säureanhydridgruppe pro Molekül enthält oder einer Mischung aus solchen Verbindungen
in geschmolzenem Zustand homogenisiert wird und die so erhaltene homogenisierte Schmelze nach Abkühlung und Erstarrung pulverisiert wird, dadurch gekennzeichnet, daß der Mischung aus A) und B) vor oder während des Schmelzhomogenisierungsprozesses
C) ein Polyol oder eine Mischung aus Polyolen in einer solchen Menge zugesetzt wird, daß pro Säureanhydridgruppe der Komponente B) 0,1 bis 0,9 Hydroxylgruppen der Komponente C) vorliegen.

2. Verfahren nach Anspruch 1, dadurch gekennzeichnet, daß als Komponente A) ein epoxidgruppenhaltiges Polyacrylatharz eingesetzt wird.

3. Verfahren nach Anspruch 1 oder 2, dadurch gekennzeichnet, daß als Komponente B) polymere Anhydride von Dicarbonsäuren mit 3 bis 20, vorzugsweise 6 bis 12 Kohlenstoffatomen im Molekül oder Mischungen aus solchen polymeren Anhydriden eingesetzt werden.

4. Verfahren nach Anspruch 3, dadurch gekennzeichnet, daß als Komponente B) polymere Anhydride von aliphatischen oder cycloaliphatischen Dicarbonsäuren eingesetzt werden.

5. Verfahren nach Anspruch 4, dadurch gekennzeichnet, daß als Komponente B) Poly(adipinsäureanhydrid), Poly(azelainsäureanhydrid), Poly(sebazinsäureanhydrid) oder Poly(dodecandisäureanhydrid) oder eine Mischung aus diesen polymeren Anhydriden eingesetzt wird.

6. Verfahren nach einem der Ansprüche 1 bis 5, dadurch gekennzeichnet, daß als Komponente C) Hexandiol, 2,2-Dimethylolpropionsäure, Trimethylolpropan oder Pentaerythrit oder eine Mischung aus diesen Polyolen, vorzugsweise Trimethylolpropan eingesetzt wird.

7. Verfahren nach einem der Ansprüche 1 bis 6, dadurch gekennzeichnet, daß die Komponente C) in einer solchen Menge zugesetzt wird, daß pro Säureanhydridgruppe der Komponente B) 0,3 bis 0,6 Hydroxylgruppen der Komponente C) vorliegen.

8. Pulverlacke, dadurch gekennzeichnet, daß sie nach einem der Ansprüche 1 bis 7 herstellbar sind.

## Claims

1. Process for the preparation of powder coatings, in which a mixture of
A) a binder comprising an epoxide group-containing synthetic resin or a mixture of epoxide group-containing synthetic resins, and
B) a crosslinking agent comprising a compound which contains on statistical average at least two carboxyl groups and at least one acid anhydride group per molecule, or a mixture of such compounds,
is homogenized in the molten state and the resulting homogenized melt, after having cooled and solidified, is powdered, characterized in that the mixture of A) and B) is admixed before or during the melt homogenization process with
C) a polyol or a mixture of polyols in such an amount that from 0.1 to 0.9 hydroxyl groups of component C) are present per acid anhydride group of component B).

2. Process according to Claim 1, characterized in that component A) is an epoxide group-containing polyacrylate resin.

3. Process according to Claim 1 or 2, characterized in that component B) is polymeric anhydrides of dicarboxylic acids having from 3 to 20, preferably from 6 to 12 carbon atoms in the molecule, or mixtures of such polymeric anhydrides.

4. Process according to Claim 3, characterized in that component B) is polymeric anhydrides of aliphatic or cycloaliphatic dicarboxylic acids.

5. Process according to Claim 4, characterized in that component B) is poly(adipic anhydride), poly(azeleic anhydride), poly(sebacic anhydride) or poly(dodecanedioic anhydride), or a mixture of these polymeric anhydrides.

6. Process according to one of Claims 1 to 5, characterized in that component C) is hexanediol, 2,2-dimethylolpropionic acid, trimethylolpropane or pentaerythritol, or a mixture of these polyols, preferably trimethylolpropane.

7. Process according to one of Claims 1 to 6, characterized in that component C) is added in an amount such that from 0.3 to 0.6 hydroxyl groups of component C) are present per acid anhydride group of component B).

8. Powder coatings, characterized in that they can be prepared according to one of Claims 1 to 7.

## Revendications

1. Procédé de fabrication de vernis en poudre, dans lequel un mélange
A) d'un liant, se composant d'une résine synthétique contenant des groupements époxyde ou un mélange de résines synthétiques contenant des groupements époxyde et
B) d'un agent de réticulation, se composant d'un composé, qui contient en moyenne statistique au moins deux groupements carboxyle et au moins un groupement anhydride d'acide par molécule ou un mélange de composés de ce genre,
est homogénéisé à l'état fondu et dans lequel la masse fondue homogénéisée ainsi obtenue après refroidissement et solidification est pulvérisée, caractérisé en ce que l'on ajoute au mélange de A) et de B), avant ou pendant le processus d'homogénéisation à l'état fondu
C) un polyol ou un mélange de polyols dans une quantité telle que soit présent, par groupement anhydride d'acide du composant B), de 0,1 à 0,9 groupement hydroxyle du composant C).

2. Procédé selon la revendication 1, caractérisé en ce que l'on utilise en tant que composant A) une résine de polyacrylate contenant des groupements époxyde.

3. Procédé selon la revendication 1 ou 2, caractérisé en ce que l'on utilise en tant que composant B) des anhydrides polymères d'acides dicarboxyliques ayant de 3 à 20, de préférence de 6 à 12 atomes de carbone dans la molécule ou des mélanges d'anhydrides polymères de ce genre.

4. Procédé selon la revendication 3, caractérisé en ce que l'on utilise en tant que composant B) des anhydrides polymères d'acides dicarboxyliques aliphatiques ou cycloaliphatiques.

5. Procédé selon la revendication 4, caractérisé en ce que l'on utilise en tant que composant B), le poly(anhydride d'acide adipique), le poly(anhydride d'acide azélaïque), le poly(anhydride d'acide sébacique) ou le poly(anhydride d'acide dodécanoïque) ou un mélange de ces anhydrides polymères.

6. Procédé selon l'une quelconque des revendications 1 à 5, caractérisé en ce que l'on utilise en tant que composant C), l'hexanediol, l'acide 2,2-diméthylolpropionique, le triméthylolpropane ou le pentaérythritol ou un mélange de ces polyols, de préférence le triméthylpropane.

7. Procédé selon l'une quelconque des revendications 1 à 6, caractérisé en ce que l'on ajoute le composant C) dans une quantité telle que soit présent, par groupement anhydride d'acide du composant B), de 0,3 à 0,6 groupement hydroxyle du composant C).

8. Vernis en poudre, caractérisés en ce qu'ils peuvent être fabriqués selon l'une quelconque des revendications 1 à 7.
